(19) Europäisches Patentamt
European Patent Office
Office européen des brevets

(11) **EP 2 226 509 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
*F04D 29/68* (2006.01)   *F01D 5/14* (2006.01)
*F04D 27/02* (2006.01)

(21) Anmeldenummer: **10006367.6**

(22) Anmeldetag: **12.10.2004**

(54) **Strömungsarbeitsmaschine mit Fluidzufuhr zur Grenzschichtbeeinflussung**

Turbo compressor or pump with fluid injection to influence the boundary layer

Turbo compresseur ou pompe avec injection de fluide pour influencer la couche limite

(84) Benannte Vertragsstaaten:
**DE FR GB**

(30) Priorität: **26.11.2003 DE 10355241**

(43) Veröffentlichungstag der Anmeldung:
**08.09.2010 Patentblatt 2010/36**

(62) Dokumentnummer(n) der früheren Anmeldung(en) nach Art. 76 EPÜ:
**04024292.7 / 1 536 147**

(73) Patentinhaber: **Rolls-Royce Deutschland Ltd & Co KG**
**15827 Blankenfelde-Mahlow (DE)**

(72) Erfinder: **Gümmer, Volker, Dr.**
**15831 Mahlow (DE)**

(74) Vertreter: **Weber, Joachim**
**Hoefer & Partner**
**Patentanwälte**
**Pilgersheimer Strasse 20**
**81543 München (DE)**

(56) Entgegenhaltungen:
**DE-B- 1 106 027      DE-T2- 69 105 418**
**GB-A- 1 085 565      US-A- 2 555 576**
**US-A- 3 846 038      US-A- 4 131 389**
**US-A- 4 863 348**

**Beschreibung**

Die vorliegende Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es kann ein Gehäuse existieren, welches die Durchströmung des Rotors und des Stators mit einem Fluid nach außen begrenzt.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben-und Gehäusewänden begrenzt. Der Stand der Technik hält für dieses fundamentale Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im Wesentlichen der Oberflächenkühlung und nicht der Grenzschichtenergetisierung dienen. Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Verwandte Alternativlösungen sehen ein direktes Durchtreten des Fluides von der Schaufeldruckseite zur Schaufelsaugseite vor. Daneben existiert für Rotoren ein Konzept zur Luftzufuhr an Nabe und Gehäuse durch achsensymmetrisch angeordnete Schlitze, um die dortigen Wandgrenzschichten zu beeinflussen. Schließlich gibt es Veröffentlichungen von Forschungsinstitutionen, die Konzepte aufzeigen, bei denen Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen trivial und nur bedingt effektiv.

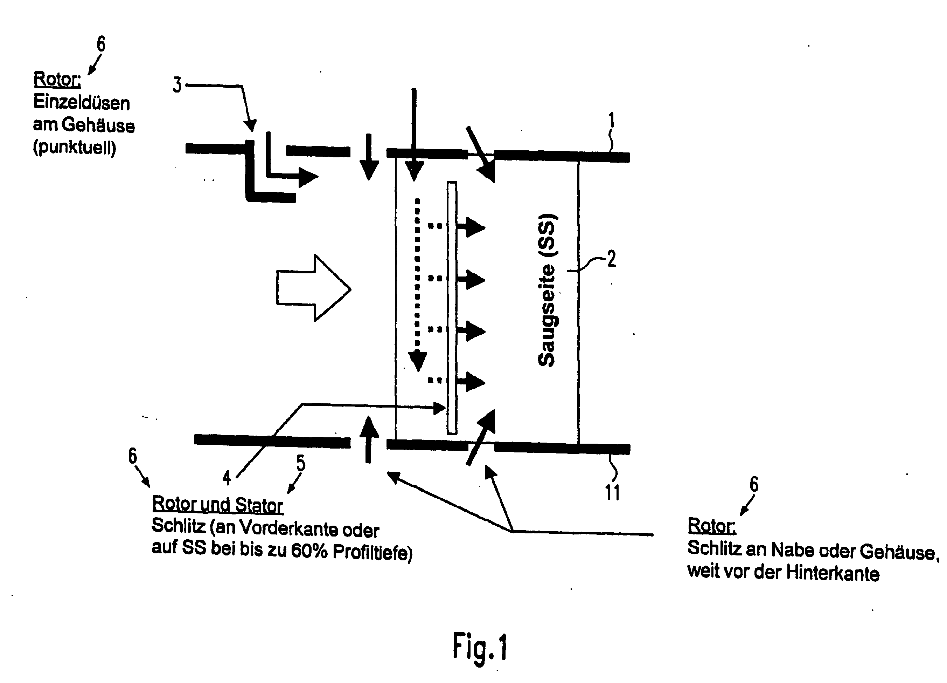

Die Fig.1 zeigt in schematischer Darstellung die aus dem Stand der Technik bekannten Lösungen. Gezeigt sind in schematischer Darstellung eine Nabe 11 und ein Gehäuse 1, zwischen welchen ein Fluid, wie durch den großen Pfeil dargestellt, von links anströmt. Weiterhin ist eine Schaufel 2 dargestellt, die entweder ein Rotor 6 oder Stator 5 sein kann und deren sichtbarer Bereich die Saugseite bildet. Wie durch die Pfeile angedeutet ist, existieren Entwürfe für eine lokale Luftzufuhr an unterschiedlichen Stellen der Strömungsarbeitsmaschine. Für Rotor-und Statorbeschaufelungen sowie ebene Experimentalschaufelgitter ist es bekannt, zwischen der Vorderkante und etwa 60% der Profiltiefe über Schlitze 4 Fluid auf die Schaufelsaugseite einzublasen, um die zweidimensional beschaffene Profilgrenzschicht zu beeinflussen. Das dazu notwendige Fluid tritt dabei aus einem hohlen, druckbeaufschlagten Innenraum der Schaufel 2 in den Hauptströmungspfad ein. Bei alternativen Lösungen ist das Schaufelprofil geteilt, um die Versorgung durch ein direktes Durchtreten des Fluides von der Schaufeldruckseite zur Schaufelsaugseite zu ermöglichen.

Für den Fall eines Rotors ist es bekannt, vor oder innerhalb des Bereichs der vorderen 50% der Profiltiefe durch einen achsensymmetrisch angeordneten Schlitz 3 Fluid an der Nabe 11 und/oder am Gehäuse 1 zuzuführen, um eine Beeinflussung der Wandgrenzschichten zu erreichen. Für Rotoren mit Gehäuseradialspalt existieren zudem Konzepte, die vorsehen, durch eine Anzahl von in den Strömungspfad vorstehenden Düsen 3 am Gehäuse Fluid punktuell einzublasen, um an diskreten Orten des Umfangs auf die Spaltströmung des Rotors Einfluss zu nehmen.

Eine hier nicht dargestellte Lösung sieht eine Entnahme auf der Schaufelsaugseite und ein Wiedereinströmen an anderer Stelle derselben Schaufel, nämlich der Schaufelspitze vor.

Der Stand der Technik beschreibt somit die folgenden Methoden einer Zufuhr von Fluid:

1.) durch gerade Schlitze im vorderen oder mittleren Bereich der Schaufelsaugseite an Rotoren und Statoren

2.) durch achsensymmetrische, flächenbündige Schlitze in Nabe und/oder Gehäuse weit vor der Schaufelhinterkante an Rotoren mit Gehäuseradialspalt

3.) durch eine Anzahl am Umfang verteilter, vorstehender Einzeldüsen am Gehäuse vor Rotoren mit Gehäuseradialspalt.

Die meisten dieser Konzepte sind nur bedingt auf strömungstechnisch besonders problematische Zonen innerhalb der Schaufelpassage ausgerichtet oder orientieren sich an der einfachen Vorstellung einer zweidimensionalen Profilumströmung ohne die Berücksichtigung der komplizierten dreidimensionalen Strömungsvorgänge im Seitenwandbereich (nahe an Nabe und Gehäuse). Andere sind trotz ihrer Ausrichtung auf lokal kritische Strömungszonen von begrenzter Wirksamkeit.

Üblicherweise wird beim Stand der Technik Hilfsluft höheren Druckes von extern zugeführt. Ein Patent sieht eine Luftversorgung von Schlitzen einer weiter stromab gelegenen Stelle der Strömungsarbeitsmaschine vor.

Der oben beschriebene Stand der Technik ist schriftlich in nachfolgenden Veröffentlichungen dokumentiert:

US 5,690,473 (Turbine blade having transpiration strip cooling and method of manufacture)

US 6,334,753 (Streamlined bodies with counter-flow fluid injection)

US 2,870,957 (Compressors)

US 2,933,238 (Axial flow compressors incorporating boundary layer control)

US 5,480,284 (Self bleeding rotor blade)

US 4 131 389, DE 69 105 418 T2

Als nachteilig erweist sich beim Stand der Technik, dass die existierenden Lösungen keine hochwirksamen und insbesondere hinsichtlich des Wirkungsgrades der Strömungsarbeitsmaschine günstigen Lösungen bilden. Vielmehr sind die existierenden Einblasekonzepte vergleichsweise primitiv und sehen entweder die alleinige Einblasung auf der Schaufelsaugseite vor oder kombinieren dies mit einer Einblasung vor oder in der Schaufelreihe durch achsensymmetrische Ringschlitze an Nabe und/oder Gehäuse. Offensichtlich fehlen Konzepte zur gezielten Strömungsbeeinflussung im randnahen Bereich und zur radial (in Schaufelhöhenrichtung) variablen Beeinflussung der Profilgrenzschichten. Eine nicht achsensymmetrische Fluidzufuhr an den Seitenwänden vor oder innerhalb des beschaufelten Region oder auch an Schaufelspitzen im Laufspalt wird nicht in Betracht gezogen, obwohl die Beeinflussung der Seitenwandgrenzschichten am Ort der Problementstehung besonders ratsam ist. Diese gezielte Beeinflussung der dreidimensionalen Strömungsvorgänge im Bereich der Schaufelenden (und des damit verbundenen Strömungsaustausches in Schaufelhöhenrichtung) wird durch existierende Konzepte nicht berücksichtigt.

Der vorliegenden Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtbeeinflussung durch gezielte Fluidzufuhr sowie einen hohen Wirkungsgrad aufweist.

Erfindungsgemäß wird die Aufgabe durch die Merkmalskombination des Hauptanspruchs gelöst.

Die erfindungsgemäße Strömungsarbeitsmaschine kann eine oder mehrere Stufen mit jeweils einem Rotor und einem Stator umfassen; in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor kann mit oder ohne Deckband am äußeren Schaufelende ausgeführt sein. Der erfindungsgemäße Stator besteht aus einer Anzahl feststehender Schaufeln, die nabenseitig wie gehäuseseitig mit festem oder freiem Schaufelende ausgeführt sein können.

Die erfindungsgemäß vorgesehene Rotortrommel und die Beschaufelung sind von einem Gehäuse umgeben.

Erfindungsgemäß kann die Strömungsarbeitsmaschine einen Stator vor dem ersten Rotor aufweisen, ein sogenanntes Vorleitrad. Erfindungsgemäß kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Zufuhr von Fluid an mindestens einer Schaufel einer Schaufelreihe des Rotors und/oder des Stators an aerodynamisch kritischen Orten auf hinterkanten- und randnahen Oberflächen (HRO) umfasst.

Zusätzlich zu Fluidzufuhrvorrichtungen an HRO weist die Strömungsarbeitsmaschine optional an mindestens einer Schaufel einer Rotor- oder Statorreihe Mittel zur Fluidzufuhr auf, die auf der Schaufelsaugseite in Meridianströmungsrichtung nicht punktuell, sondern über einen definierten Bereich verteilt angelegt sind, und deren Meridianerstreckung in meridianstromlinienorthogonaler Richtung zu wenigstens einer der Ringkanalwände (Nabe oder Gehäuse) hin abnimmt (saugseitige, intensitätsvariable Fluidzufuhr SIFZ).

Im Folgenden werden Fluidzufuhrvorrichtungen in Verbindung mit den Figuren beschrieben, wobei die Erfindung lediglich die Figuren 15 bis 18 betrifft. Dabei zeigt:

Fig.1:          eine schematische Darstellung des Standes der Technik

Fig.2: eine schematische Darstellung von Varianten eines Grundkonzeptes

Fig.3: eine weitere schematische Darstellung von Vari- anten eines Grundkonzeptes

Fig.4: verschiedene Varianten und Konfigurationen der erfindungsgemäßen Strömungsarbeitsmaschine

Fig.5: eine Darstellung zur Definiti- on des Begriffs HRO

Fig.6: eine :Darstellung zur Definiti- on von HRO, Typen A und B

Fig.7: eine Darstellung zur Definiti- on von HRO, Typen C, D und E

Fig.8: eine weitere Darstellung zur Definition von HRO, Typen C, D und E

Fig.9 bis 11: unterschiedliche Ausgestaltungsformen von Kam- mern zur Zuführung des Fluids, vornehmlich vom Gehäuse aus

Fig.12 bis 14: Ausgestaltungsvarianten analog Fig.9 bis 11 mit Kammern zur Zuführung des Fluids, vornehmlich von der Nabe aus

Fig.15 bis 18: erfindungsgemäße Ausführungsvarianten einer Flu- idzufuhrvorrichtung an Hinterkanten- und Randna- hen Oberflächen (HRO) des Typs C

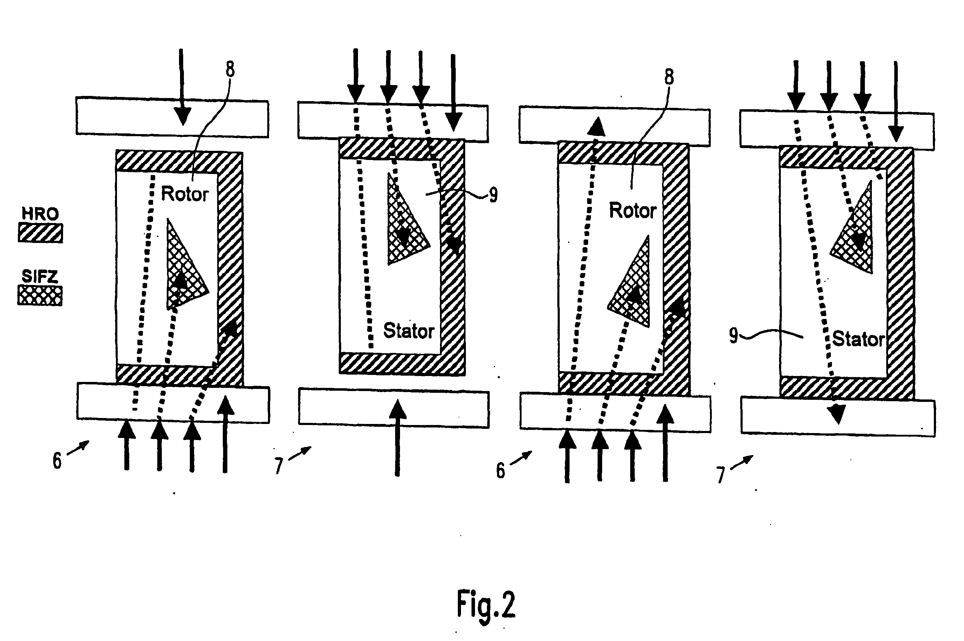

Die Fig. 2 zeigt in stark vereinfachter Darstellung eine Lösung an vier unterschiedlich konfigurierten Schaufelreihen, welche jeweils einen Rotor 6 beziehungsweise einen Stator 7 umfassen, die mit Rotorschaufeln 8 beziehungsweise Statorschaufeln 9 versehen sind. Mit dem Bezugzeichen 1 wird in stark vereinfachter Darstellung ein Gehäuse oder ein außenliegendes Deckband wiedergegeben. Das Bezugzeichen 11 kennzeichnet eine Rotortrommel oder ein innenliegendes Deckband. Die gewählte Ansicht der Schaufel kann sowohl die Saugseite als auch die Druckseite der Schaufel repräsentieren. Auf Rotoren und Statoren ist eine Zone für saugseitige intensitätsvariable Fluidzufuhr (SIFZ) vorgesehen.

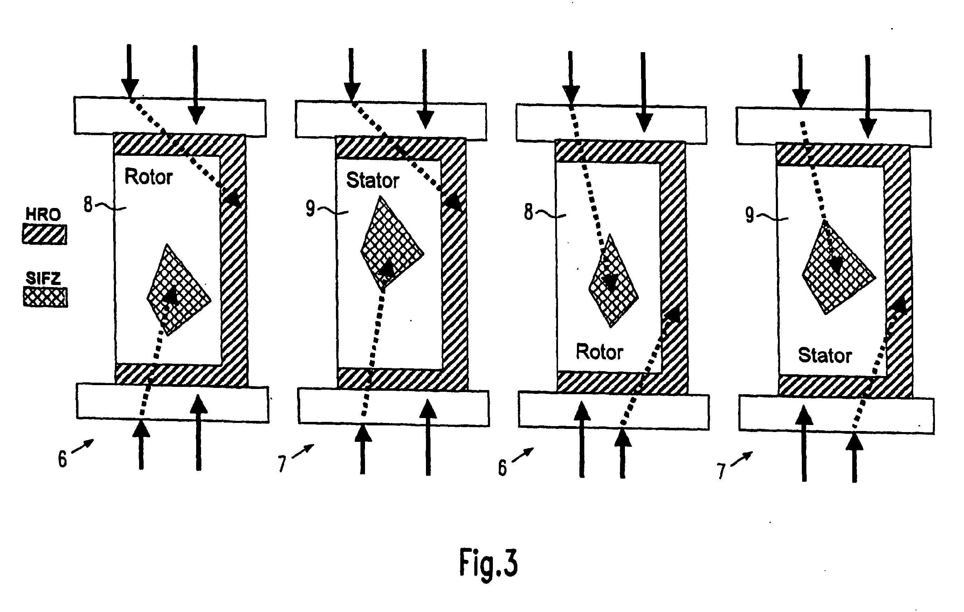

In analoger Weise zeigt Fig. 3 ein Grundkonzept.

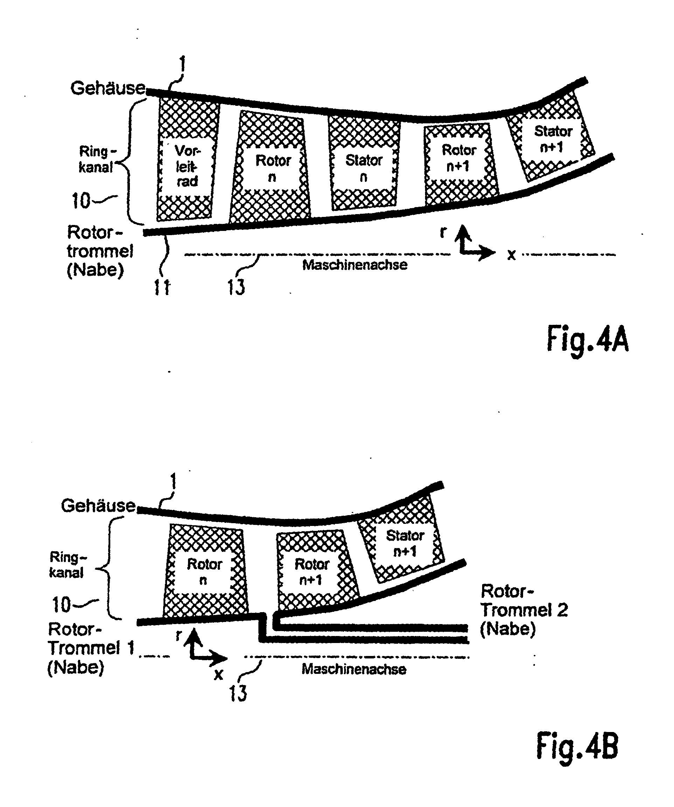

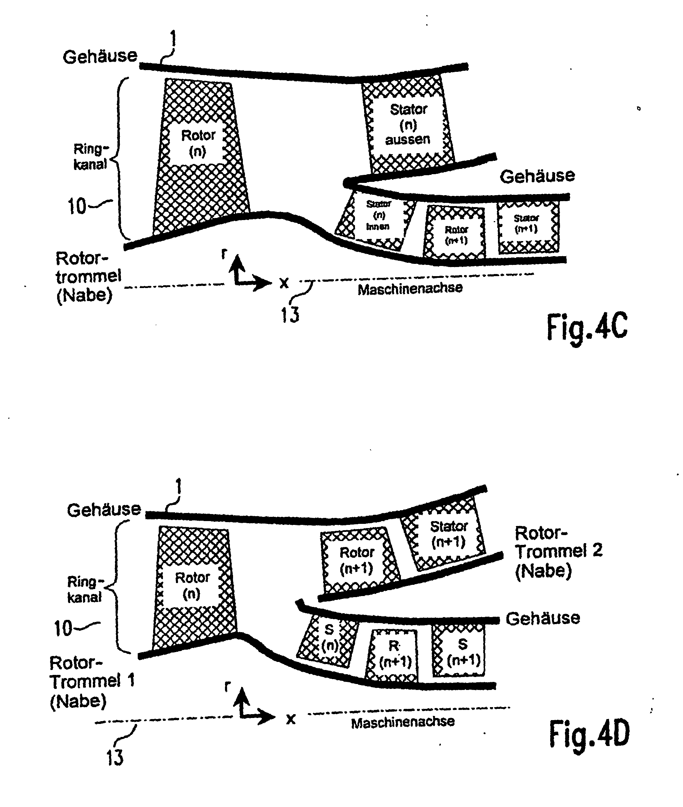

Die Fig. 4 zeigt vier verschiedene Konfigurationen der erfindungsgemäßen Strömungsarbeitsmaschine. Dabei bezeichnet das Bezugzeichen 10 einen von links nach rechts zu durchströmenden Ringkanal, mit dem Bezugzeichen 13 ist die Maschinenachse dargestellt, um welche sich eine Rotortrommel (Nabe) 11 dreht. Bei den in Fig. 4B und 4D gezeigten Beispielen ist eine weitere Rotortrommel (Nabe) vorgesehen. Die Rotoren, Statoren sowie das Vorleitrad sind jeweils in Fig. 4 beschriftet, es ist jeweils in schematischer Weise eine Schaufel dargestellt.

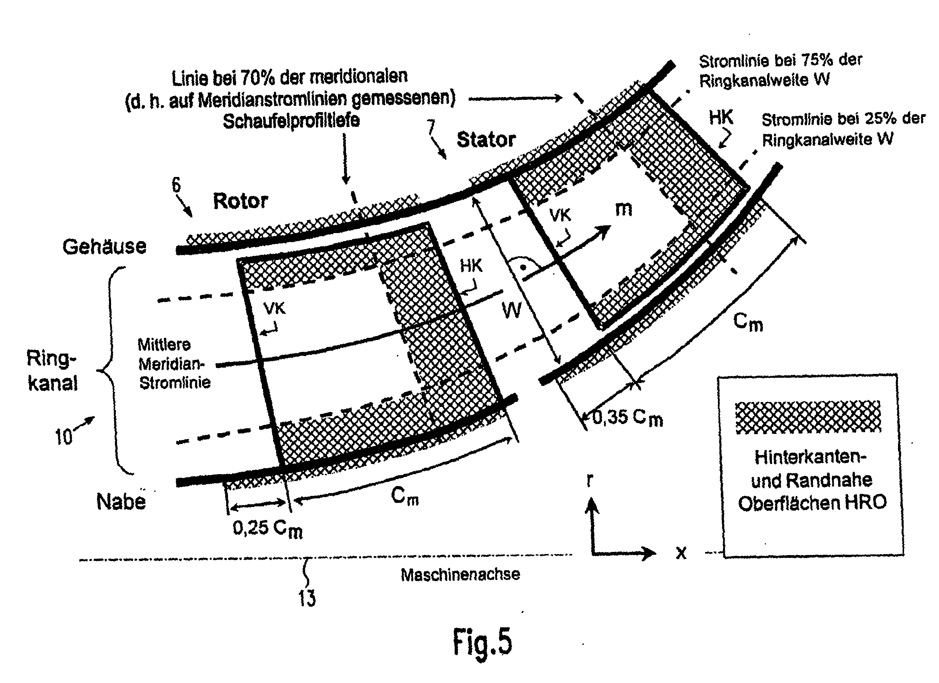

Die Fig. 5 zeigt die Definition der Hinterkanten- und Randnahen Oberflächen (HRO). Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

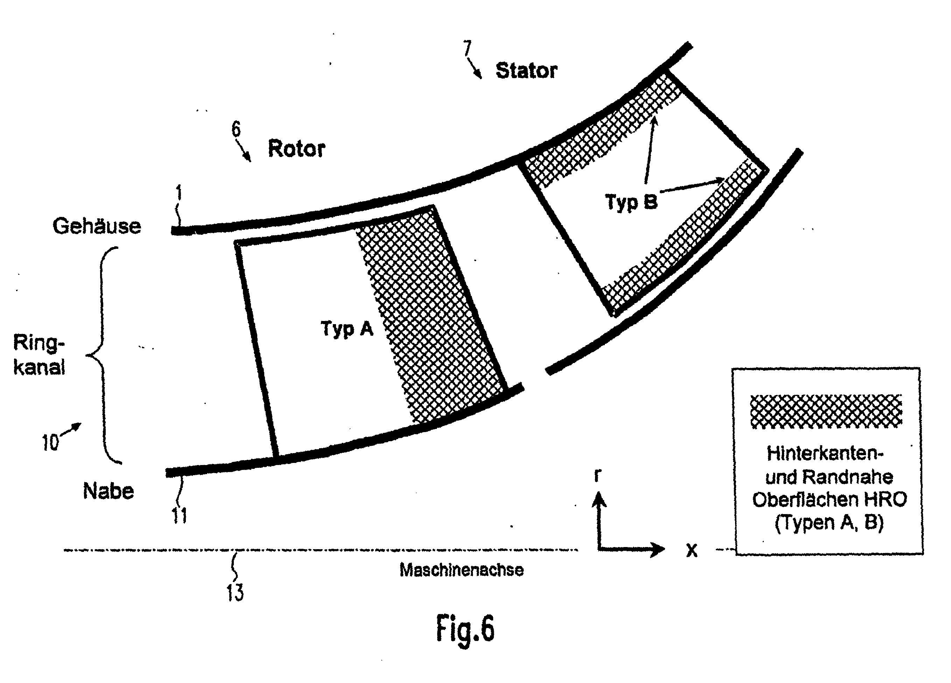

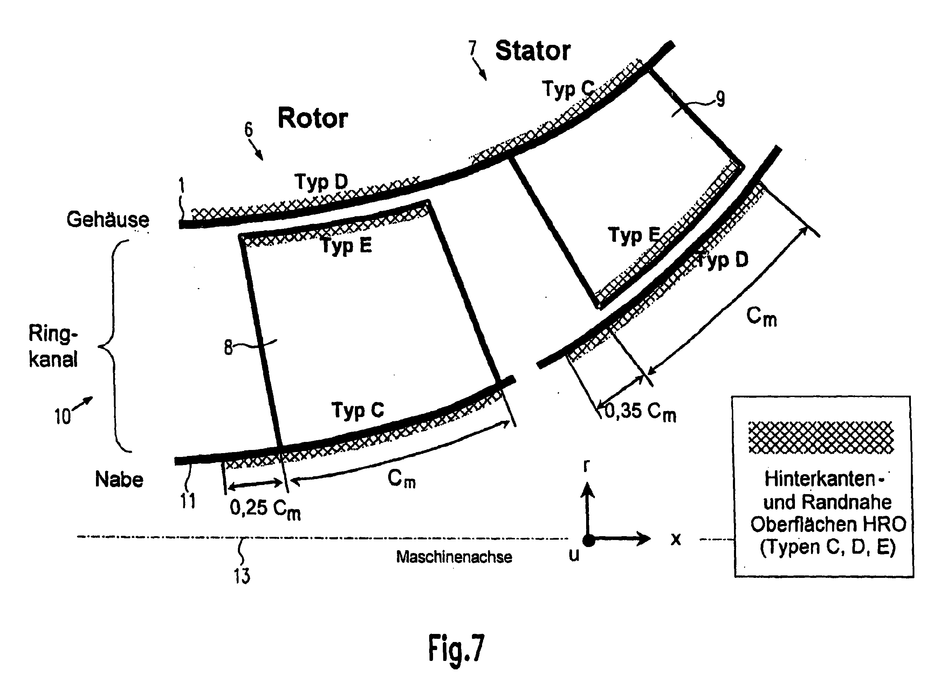

Wie die Darstellungen in Fig. 6 und 7 zeigen, ergeben sich fünf HRO-Typen:

HRO, Typ A: Die Oberflächen sind an der Schaufelsaug- oder Druckseite eines Rotors oder Stators ausgebildet, und zwar zwischen 70% und 100% der meridionalen Schaufelsehnenlänge Cm. O-berflächenabschnitte im zentralen Bereich der Hinterkante, deren Oberflächennormale einen Winkel von weniger als 60 Grad mit der mittleren Abströmrichtung bildet, sind dabei ausgeschlossen.

HRO, Typ B: Die Oberflächen sind an der Schaufelsaugseite, der Schaufeldruckseite, der Vorderkante oder der Hinterkante eines Rotors oder Stators ausgebildet, und zwar an der Nabe zwischen 0% und 25% der lokalen Ringkanalweite W und am Gehäuse zwischen 75% und 100% der lokalen Ringkanalweite W.

HRO, Typ C: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25% der meridionalen Schaufelsehnenlänge Cm vor der Vorderkante VK befindet.

HRO, Typ D: Die Oberflächen sind an Naben- und Gehäusekontur des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 35% der meridionalen Schaufelsehnenlänge Cm vor der Vorderkante VK befindet, ausgebildet.

HRO, Typ E: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

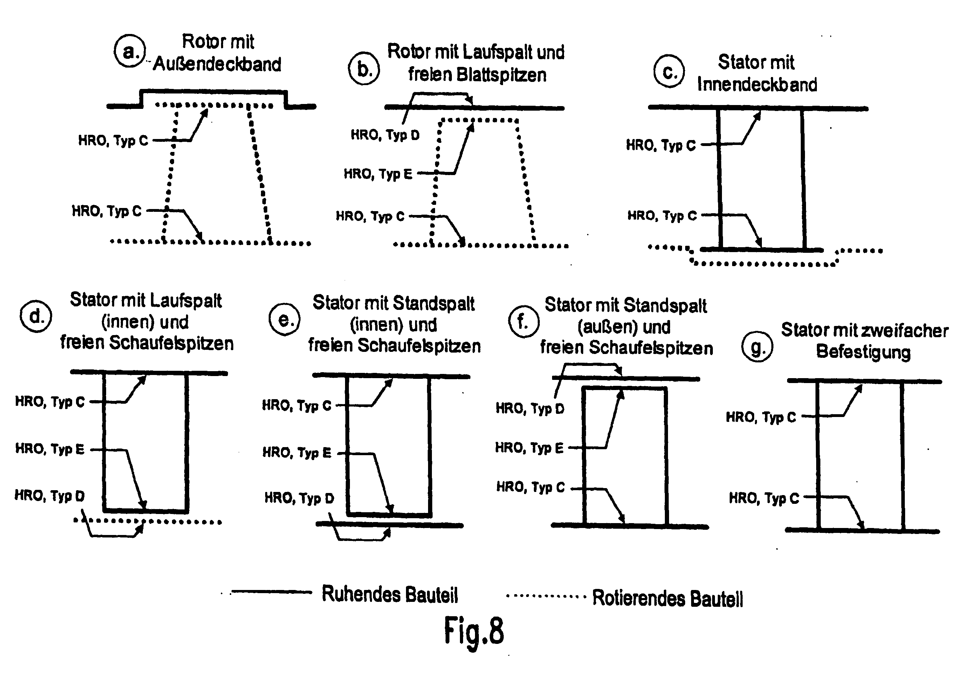

Die Fig. 8 zeigt unterschiedliche Ausführungen von Schaufelreihen der Strömungsarbeitsmaschine mit einer Kennzeichnung der wiederkehrenden Elemente HRO, Typ C, Typ D, Typ E. Im Einzelnen zeigen dabei die Ausführungsbeispiele Folgendes:

Die Fig. 8a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 8b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 8c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenes Deckband und einer innerhalb der ruhenden Bauteile rotierenden Rotortrommel.

Die Fig. 8d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 8e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 8f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 8g verdeutlicht eine Baugruppe, welche aus einem ruhenden Innen- und Außengehäuse besteht, sowie mehreren mit dem Innen- und Außengehäuse verbundenen Statorschaufeln.

Erfindungsgemäß erfolgt die Führung des zuzuführenden Fluids über Strömungswege an der Peripherie des Ringkanals 10 oder innerhalb von Schaufeln 8, 9 und ihrer umgebenden Bauteile. Erfindungsgemäß wird das Fluid dabei entweder bei freier Strömung oder aber mit Hilfe mindestens eines im Strömungsweg befindlichen Drosselorgans 12, das unverstellbar oder auch regelbar sein kann, in den Ringkanal im Bereich der betreffenden Schaufelreihe zugeführt. Die Zuführung des Fluids erfolgt entweder von einer Fremdquelle aus oder wird von Orten der Strömungsarbeitsmaschine oder der die Strömungsarbeitsmaschine einschließenden Gesamtanlage zurückgeführt.

Die notwendigen Elemente des Strömungsweges können erfindungsgemäß als einfacher Hohlraum, als Ringraum, als Rohrleitung, als Kanal, als Düse oder als Diffusor beliebiger Querschnittsform ausgestaltet sein und werden erfindungsgemäß im Folgenden unter dem Begriff "Kammer" zusammengefasst.

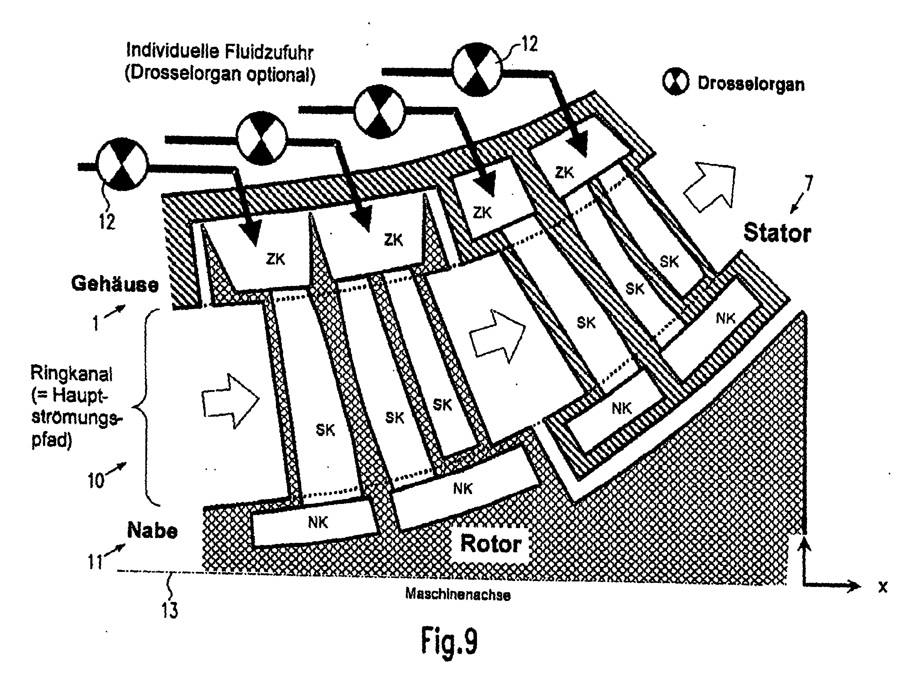

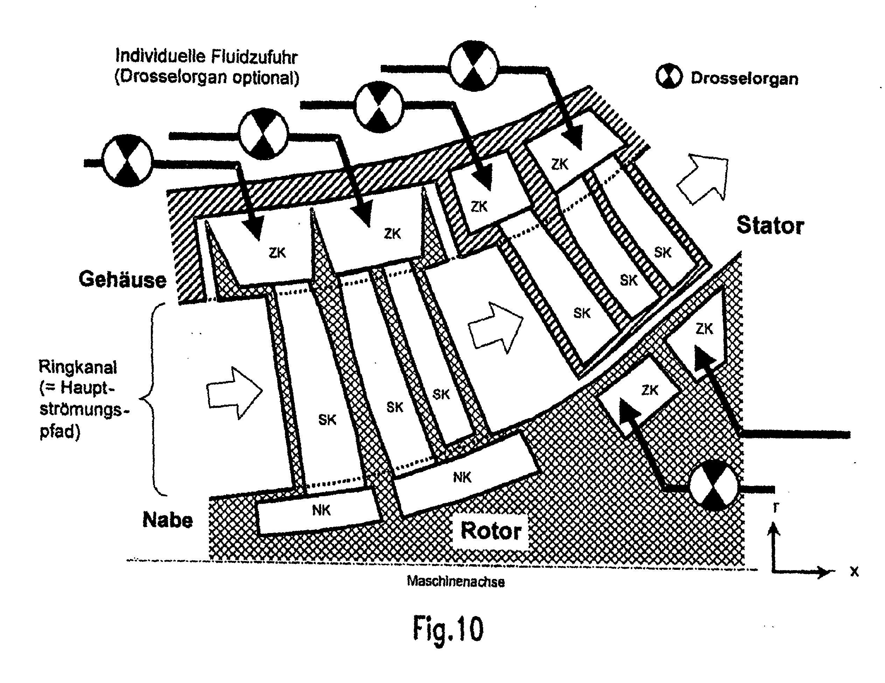

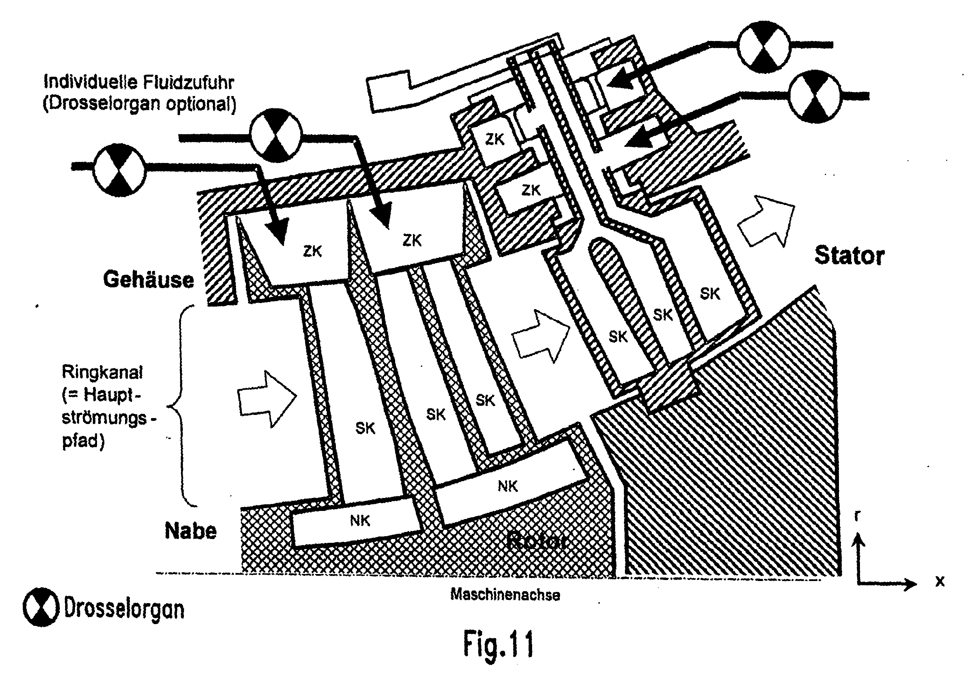

Die Fig. 9 bis 11 zeigen unterschiedliche Ausgestaltungsvarianten der Erfindung mit Konfigurationen, bei welchen Zufuhrkammern (ZK), Schaufelinnenkammern (SK) und Nabenkammern (NK) vorgesehen sind.

Im Einzelnen zeigen die Fig. 9 bis 11 Ausgestaltungsvarianten, bei welchen den einzelnen Schaufelreihen jeweils mindestens eine Kammer am oder im Gehäuse zugeordnet ist, durch die Fluid der Schaufelreihe zugeführt wird (Zufuhrkammer ZK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur inneren Ringkanalkontur, so kann als letztes Kammerglied des zur Fluidzufuhr konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und von dieser Fluid entgegen nimmt.

Besitzt die Schaufel ein freies Ende mit Radialspalt an der Nabe, oder weist die Schaufel keine über die gesamte Schaufelhöhe reichende Schaufelinnenkammer auf, kann zur Fluidzufuhr an der Nabe ebenfalls mindestens eine Zufuhrkammer ZK an oder in der Nabe außerhalb des Ringkanals existieren.

Zufuhrkammern und Nabenkammern erstrecken sich über die Gesamtheit oder Teile des Maschinenumfangs. Die Zufuhrkammern ZK dienen der Zuleitung des Fluids zur betreffenden Schaufelreihe, wobei die Schaufelinnenkammern SK Nabenkammern Hilfsmittel sind, um den Zugang zu den relevanten Hinterkanten- und Randnahen Oberflächen (HRO) der betreffenden Schaufelreihe herzustellen.

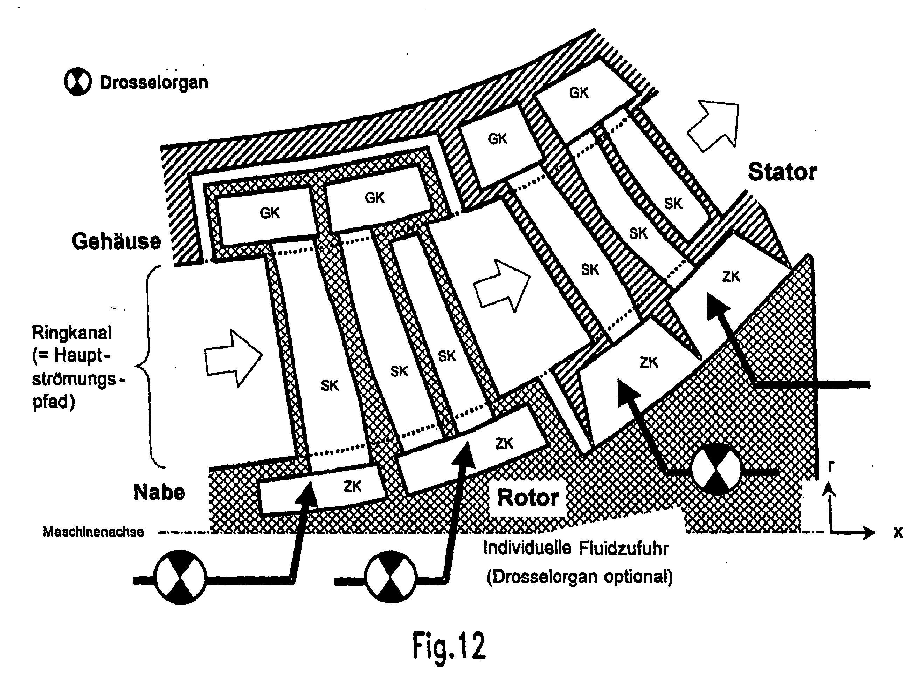

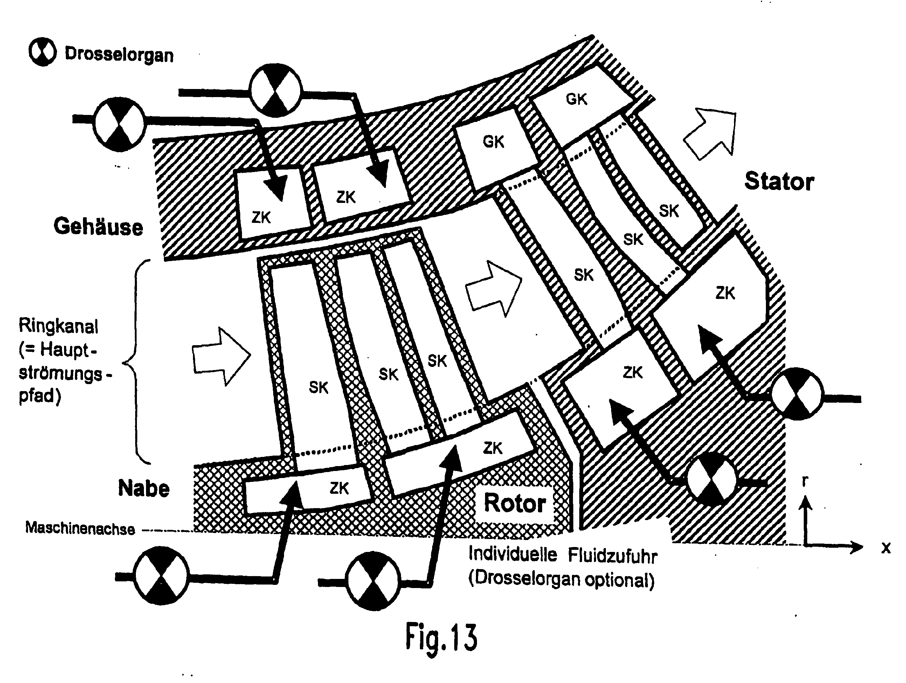

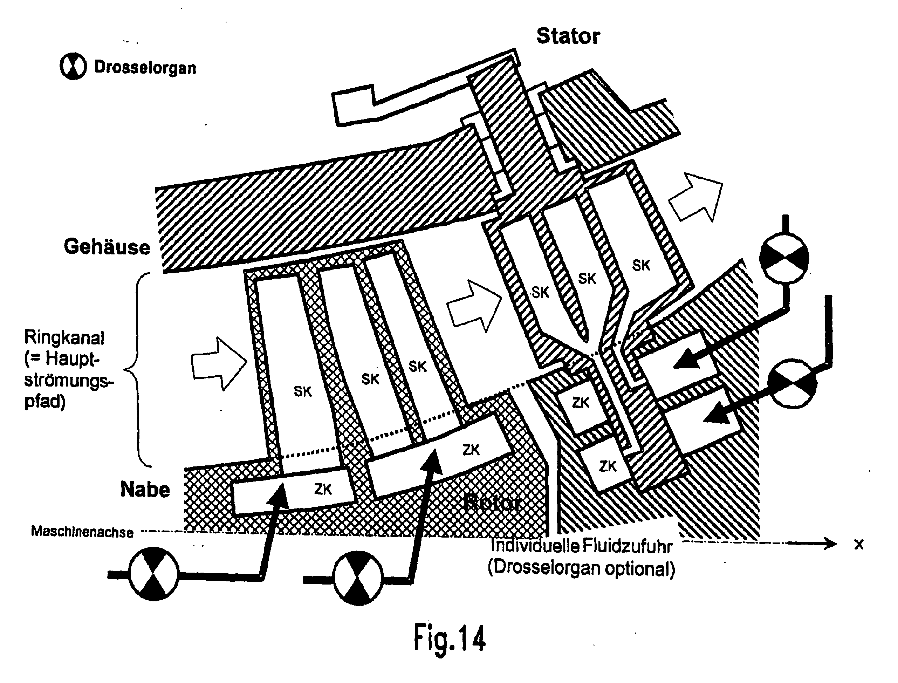

Während in den Fig. 9 bis 11 Ausgestaltungsformen gezeigt wurden, bei welchen mindestens eine Zufuhrkammer ZK am oder im Gehäuse angeordnet ist, zeigen die Fig. 12 bis 14 Ausgestaltungsformen, bei welchen mindestens eine Kammer an oder in der Nabe angeordnet ist, durch die Fluid der Schaufelreihe zugeführt wird (Zufuhrkammer ZK).

Für den Fall, dass mindestens eine weitere Kammer im Innern mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur äußeren Ringkanalkontur, so kann als letztes Kammerglied des zur Fluidzufuhr konzipierten Gesamtströmungsweges mindestens eine Kammer am oder im Gehäuse existieren (Gehäusekammer GK), die mit mindestens einer Schaufelinnenkammer SK in Verbindung steht und von dort Fluid entgegen nimmt.

Besitzt die Schaufel ein freies Ende mit Radialspalt am Gehäuse oder weist die Schaufel keine über die gesamte Schaufelhöhe reichende Schaufelinnenkammer auf, kann zur Fluidzufuhr am Gehäuse ebenfalls mindestens eine Zufuhrkammer am oder im Gehäuse außerhalb des Ringkanals existieren.

Die Zufuhrkammern und Gehäusekammern erstrecken sich über die Gesamtheit oder nur Teile des Umfangs der Strömungsarbeitsmaschine. Die Zufuhrkammern dienen der Zuleitung des Fluids zu der betreffenden Schaufelreihe. Die Schaufelinnenkammern und die Gehäusekammern sind Hilfsmittel, um den Zugang zu relevanten Hinterkanten- und Randnahen Oberflächen (HRO) im Bereich der betreffenden Schaufelreihe herzustellen.

Es ist vorgesehen, dass bei einer Schaufelreihe der im Zusammenhang mit den Fig. 9 bis 11 bzw. 12 bis 14 beschriebenen Ausgestaltungsformen an mindestens einer Hinterkanten- und Randnahen Oberfläche (HRO) an mindestens einer ihrer Schaufeln und/oder mindestens einem ihrer den Ringkanal begrenzenden Bauteile mindestens eine Fluidzufuhrvorrichtung angeordnet ist, die eine Verbindung zwischen der Hinterkanten- und Randnahen Oberflächen (HRO) und einer Zufuhrkammer ZK, einer Schaufelinnenkammer SK, einer Nabenkammer NK oder einer Gehäusekammer GK herstellt. Die konstruktive Ausführung der Fluidzufuhrvorrichtung erfolgt durch mechanische, chemische oder thermische Materialabtragsverfahren an dem die Hinterkanten- und Randnahen Oberfläche (HRO) bildenden Bauteil.

In einer alternativen Ausgestaltung der Erfindung erhält die Fluidzufuhrvorrichtung ihre Begrenzungen durch Kombination mindestens zweier vorbereiteter Einzelbauteile, die lose oder fest zusammengefügt werden.

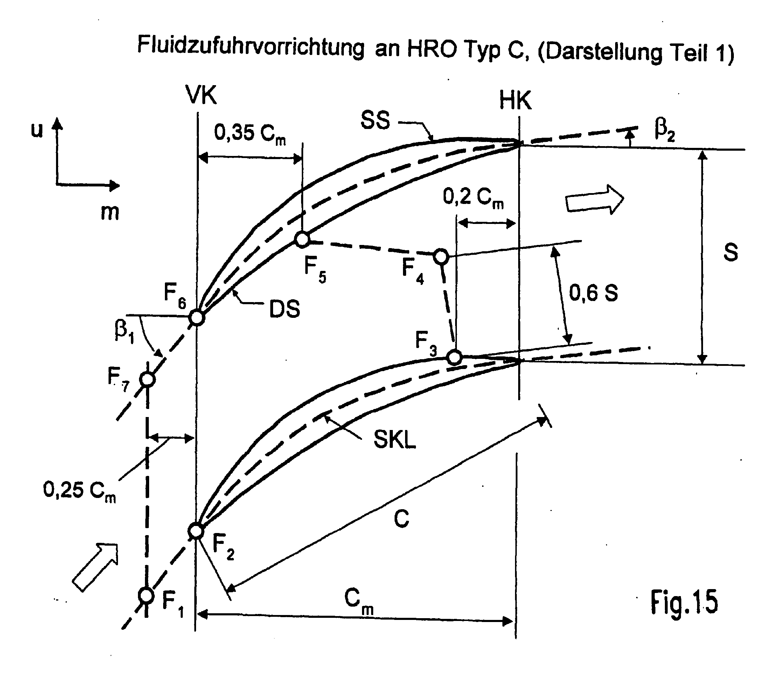

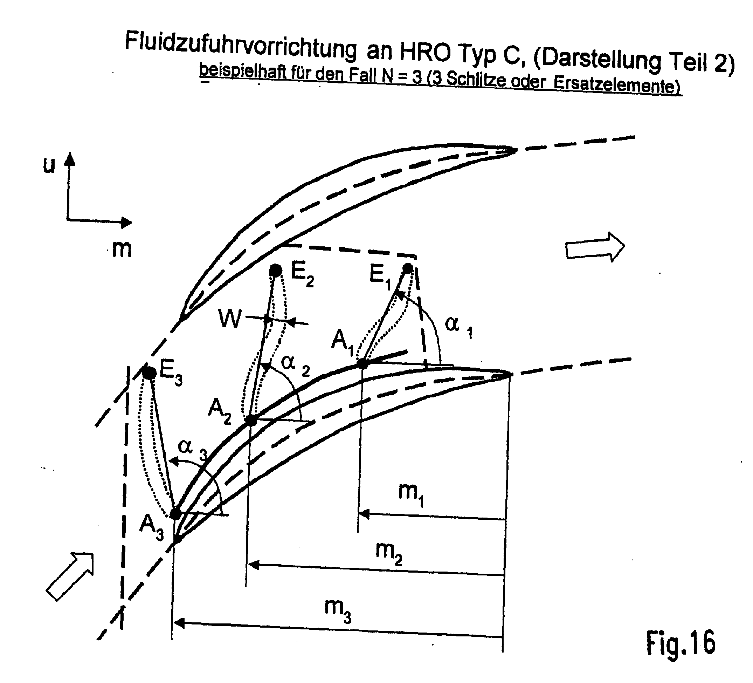

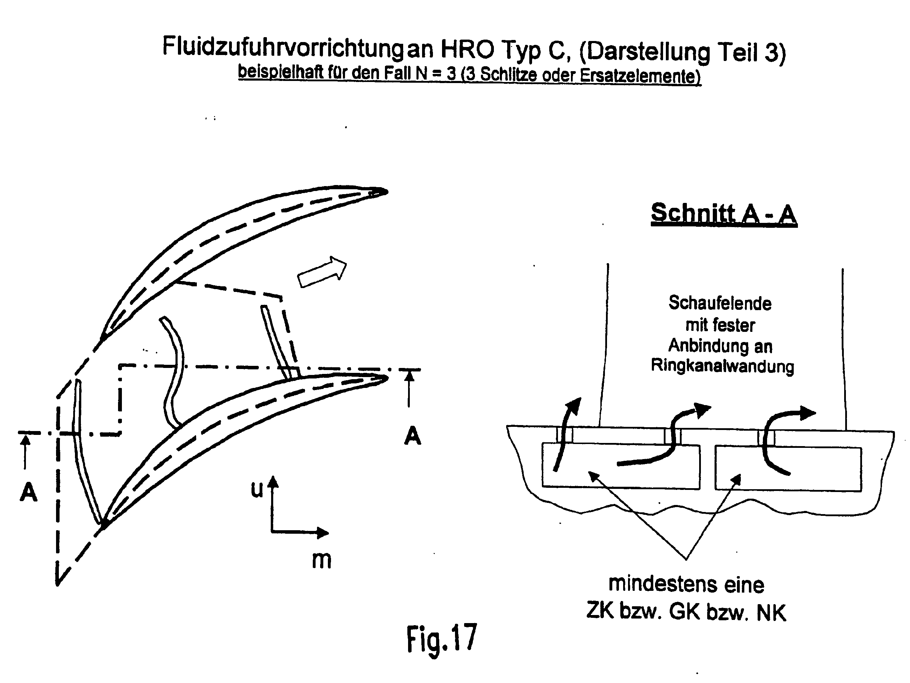

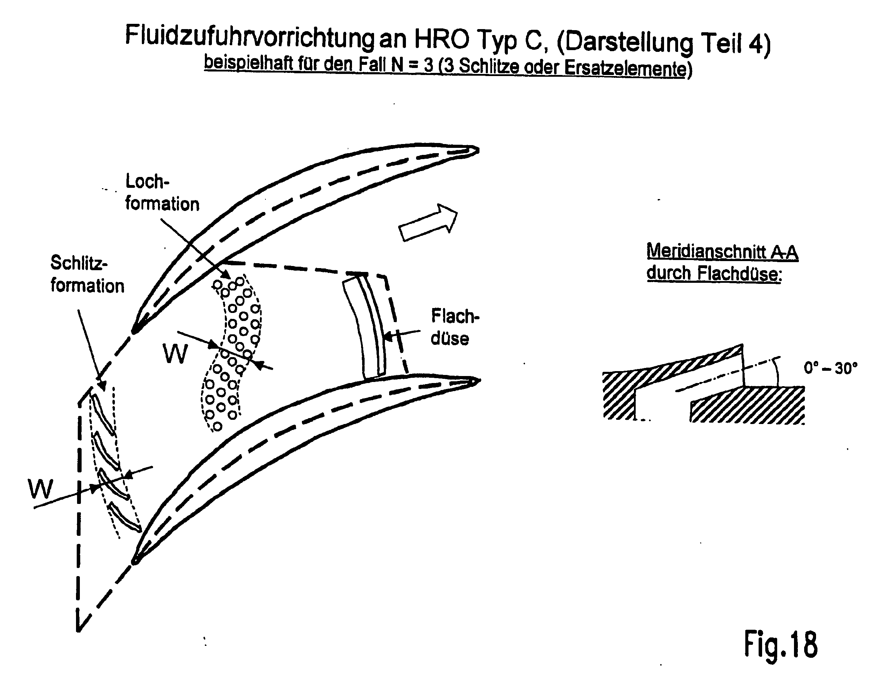

Die Fig. 15 bis 18 zeigen erfindungsgemäße Ausführungsbeispiele für die Fluidzufuhrvorrichtung an Hinterkanten- und Randnahen Oberflächen (HRO) des Typs C (Fig. 15), beispielhaft für den Fall N=3 (Fig. 16) sowie beispielhaft für den Fall N=3 (3 Schlitze oder Ersatzelemente) siehe Fig. 17 und 18. Gezeigt sind Konfigurationen von Schlitzen bzw. funktional ähnlichen Ersatzelementen im vorderen Teil der Schaufelpassage. Einzelne Schlitze bzw. Ersatzelemente können unterschiedlichen Schaufelinnenkammern zugeordnet sein.

Betrachtet man die Ringkanaloberfläche in dem aus Meridianstromlinienrichtung und Umfangsrichtung gebildeten Koordinatensystem (m,u), so befindet sich eine Konfiguration von Schlitzen in einer Zone der Ringkanalwand, die durch den Kurvenzug F1-F2-F3-F4-F5-F6-F7-F1 umschlossen wird. Die Strecke F1-F2 stellt, ebenso wie die Strecke F6-F7, eine tangentiale Verlängerung der Profilskelettlinie SKL gegen die Strömungsrichtung dar. Die Strecke F1-F7 liegt 25% der meridionalen Profilsehnenlänge (0.25 * Cm) vor der Vorderkantenebene. Die Strecke F2-F3 ist durch die Saugseitenkontur SS zwischen Vorderkante VK und einem Punkt 20% der meridionalen Sehnenlänge (0.2 * Cm) vor der Hinterkante HK gegeben. Die Strecke F3-F4 verläuft senkrecht zur tangentialen Verlängerung der Profilskelettlinie an der Hinterkante und führt saugseitig um einen Betrag von 60% der austrittseitigen Schaufelteilung (0,6 * S) in Richtung der Druckseite des benachbarten Profils. Die Strecke F4-F5 mündet in einen um 35% der meridionalen Profilsehnenlänge (0.35 * Cm) in der Schaufelpassage gelegenen Punkt der Druckseite des gegenüberliegenden Profils. Die Strecke F5-F6 führt entlang der Druckseite zur Vorderkante VK.

Eine Anzahl von mindestens 2 Schlitzen (Anzahl N>1) bildet eine besondere Anordnung, die etwa orthogonal zur gewünschten Richtung der Wandgrenzschichtströmung ausgerichtet ist. Das Konzept geht aus von einem Schlitz nahe der hinterkantenseitigen Begrenzung der für die Fluidzufuhr vorgesehenen Zone F1-F2-F3-F4-F5-F6-F7-F1. Weitere Schlitze sind umso stärker gegen die Meridianströmungsrichtung m geneigt, je näher sie am Eintritt des Schaufelkanals liegen. Alle Schlitze sind definiert durch einen Anfangspunkt, einen Endpunkt und eine Winkelangabe für die von Anfangs- zu Endpunkt reichende Hilfsgerade. Die Anfangspunkte befinden sich auf einer Basislinie, die entweder durch die Saugseitenkontur selbst oder an der Saugseitenkontur orientierten Linie gegeben ist, die in Umfangsrichtung u aber an keiner Stelle weiter als 20% der austrittseitigen Schaufelteilung (0,2 * S) von ihr entfernt liegt. Die Lage aller Anfangspunkte ist durch die Basislinie und einen meridionalen Abstand zur Hinterkantenebene festgelegt.

Der meridionale Hinterkantenabstand m(i) eines Anfangspunktes A(i) des Schlitzes mit der Nummer (i) beträgt

$$m(i) = 0{,}3 * Cm + 0{,}7 * Cm * (i - 1) / (N - 1).$$

Für m(i) gilt eine Toleranz von +/- 0,1 * Cm. Der Neigungswinkel der Hilfsgeraden zwischen dem Anfangspunkt A(i) und dem Endpunkt E(i) eines Schlitzes mit der Nummer (i) beträgt

```
alpha(i) =  beta2 + 90° + (i - 1) * ( beta1 - beta 2) / (N -
1)
```

Für alpha(i) gilt eine Toleranz von +/- 20°.

Der Verlauf eines jeden Schlitzes ist gestützt durch die jeweilige Hilfsgerade, muss aber mit ihr lediglich in Anfangs- und Endpunkt genau übereinstimmen. Alle Schlitze enden in den Grenzen des durch den Kurvenzug F1-F2-F3-F4-F5-F6-F7-F1 umschlossenen Ringkanalwandsegmentes.

Sie verlaufen zwischen Anfangspunkt und Endpunkt geradlinig, einfach gekrümmt oder mehrfach gekrümmt. Sie besitzen eine konstante oder in Längsrichtung veränderliche Weite W, die aber stets kleiner als 10% der austrittseitigen Schaufelteilung bleibt (W < 0,1 * S). Sie weisen eckige, angefasste oder gerundete Oberflächenkanten auf. Sie besitzen an Anfangs- und Endpunkt eine eckige Form oder einen runden (langlochähnlichen) Abschluss. Die Schlitze führen senkrecht oder schräg zur Ringkanaloberfläche durch das Wandmaterial in eine Zufuhrkammer ZK, eine Nabenkammer NK oder eine Gehäusekammer GK.

In einer abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine Formation aus mehreren geraden oder gekrümmten Schlitzen mit einer maximalen Weite W der Schlitzkonfiguration von 15% der austrittseitigen Schaufelteilung (W < 0,15 * S).

In einer anderen abgewandelten Form tritt - bei gleichen Regeln hinsichtlich der Positionierung und des Verlaufes an der Ringkanaloberfläche sowie der Beschaffenheit der Oberflächenkanten und Orientierung in der Ringkanalwand - an die Stelle mindestens eines Schlitzes eine ein- oder mehrreihige Formation von Löchern mit einer maximalen Weite W der Lochkonfiguration von 15% der austrittseitigen Schaufelteilung (W < 0,15 * S).

In einer anderen abgewandelten Form ist - bei gleichen Regeln hinsichtlich der Positionierung und des Verlaufes an der Ringkanaloberfläche - mindestens ein Schlitz als Flachdüse ausgeformt, dadurch gekennzeichnet, dass Fluid unter höchstens 30° zur Ringkanaloberfläche zugeführt wird und die Ringkanaloberfläche einen entsprechenden Absatz , aufweist.

Bei der erfindungsgemäßen Strömungsarbeitsmaschine wird somit ein bislang unerreichtes Maß an Grenzschichtbeeinflussung erzielt. Dies ist bei unterschiedlichen Arten von Strömungsarbeitsmaschinen wie Bläsern, Verdichtern, Pumpen und Ventilatoren möglich. Je nach Ausführungsvariante sind eine aerodynamische Belastung und eine Strömungsumlenkung möglich, die bis zu 50% über den nach heutigem Stand der Technik erreichten Werten liegen. Für festgeschriebene Leistungswerte einer Strömungsarbeitsmaschine lässt sich unter Beibehaltung oder einer Verbesserung des Wirkungsgrades von bis zu 1% die Anzahl der verbauten Teile um etwa 30% gegenüber einer konventionellen Bauweise senken. Die Kosten sinken um 10% bis 15%. Bei Einsatz des neuen Schaufelkonzeptes im Verdichter eines Flugtriebwerkes mit rund 25000 Pfund Schub ergibt eine Reduzierung des spezifischen Kraftstoffverbrauches von bis zu 0,5% und eine Gewichtsersparnis von rund 5%.

**Bezugszeichenliste**

| | |
|---|---|
| 1 | Gehäuse |
| 2 | Schaufel |
| 3 | Schlitz |
| 4 | Schlitz |
| 5 | Stator |
| 6 | Rotor |
| 7 | Stator |
| 8 | Rotorschaufel |
| 9 | Statorschaufel |
| 10 | Ringkanal |
| 11 | Rotortrommel (Nabe) |
| 12 | Drosselorgan |
| 13 | Maschinenachse |

**Patentansprüche**

**1.** Strömungsarbeitsmaschine mit zumindest einem Rotor (6), der mehrere an einer rotierenden Welle befestigte Rotorschaufeln (8) umfasst, sowie mit einem einen Ringkanal bildenden Gehäuse (1), welches unter Durchströmung des Rotors (6) und/oder eines Stators (9) von einem Fluid durchströmt wird,

wobei Mittel zur Zufuhr von Fluid an mindestens einer Schaufel (8) einer Schaufelreihe des Rotors (6) und /oder des Stators (9) an aerodynamisch kritischen Orten auf hinterkanten- und randnahen Oberflächen (HRO) vorgesehen sind,

wobei zur gezielten Beeinflussung der dreidimensionalen Strömung im Bereich der Schaufelenden die Mittel zur Zufuhr von Fluid an hinterkanten- und randnahen Oberflächen (HRO) an Oberflächen der Naben- oder Gehäusekontur des Ringkanals (10) im Bereich einer festen Verbindung zur Schaufel zwischen der Hinterkantenebene (HK) der Schaufel und einer 25% der meridionalen Schaufelsehnenlänge Cm stromauf der Vorderkante (VK) befindlichen Ebene an dem Rotor (8) oder Stator (9) ausgebildet sind,

**dadurch gekennzeichnet, dass**

die Mittel zur Fluidzufuhr durch Öffnungselemente aus einer Öffnungselementegruppe umfassend einen Schlitz, eine Reihe von lochartigen Ausnehmungen mit einer maximalen Weite (W) der Lochkonfiguration von 15% der austrittseitigen Schaufelteilung (W < 0,15 * S) und/oder eine Flachdüse, welche als Schlitz ausgeformt ist, wobei Fluid unter höchstens 30° zur Ringkanaloberfläche zugeführt wird und die Ringkanaloberfläche einen entsprechenden Absatz aufweist, gebildet sind,

dass die Mittel zur Fluidzufuhr durch eine Mehrzahl von Öffnungselementen der Öffnungselementegruppe gegeben sind, wobei die Anordnung jedes Öffnungselements durch einen Anfangspunkt A und einen Endpunkt E sowie die Neigung der durch die Punkte A und E verlaufenden Hilfsgeraden zur Meridianstrom-Linienrichtung (m) definiert ist, wobei jeder der Anfangspunkte A eines Öffnungselements auf einer Basislinie im Bereich zwischen der Saugseitenkontur selbst und einer im Abstand von 20% der austrittseitigen Schaufelteilung S von der Saugseitenkontur definierten Grenze angeordnet ist,

dass (i) der Laufindex der Öffnungselemente ist und entgegen der Passagenströmungsrichtung als ansteigend definiert ist, wobei N die Anzahl der Mehrzahl von vorgesehenen Öffnungselementen ist, wobei der meridionale Hinterkantenabstand m(i), d.h. der Abstand eines jeden Anfangspunktes A(i) eines Öffnungselements (i) von der Hinterkantenebene entgegen der Meridionalströmungsrichtung, gemäß folgender Regel festgelegt ist: $\{0{,}3{*}Cm + 0{,}7{*}Cm{*} (i{-}1)/(N{-}1)\} - 0{,}1{*}Cm < m(i) < \{0{,}3{*}Cm + 0{,}7{*}Cm{*}(i{-}1)/(N{-}1)\} + 0{,}1{*}Cm$,

dass die Mittel zur Fluidzufuhr durch eine Mehrzahl von Öffnungselementen der Öffnungselementegruppe gegeben sind, wobei die Anordnung jedes Öffnungselements durch einen Anfangspunkt A und einen Endpunkt E sowie eine Neigung der durch die Punkte A und E verlaufenden Hilfsgeraden zur Meridianströmungs-Linienrichtung (m) definiert ist, wobei die Neigung eines Öffnungselements durch den Winkel $\alpha$, gemessen entgegen des Drehsinnes der Strömungsumlenkung der Schaufelreihe zwischen der Meridionalströmungsrichtung m und der Hilfsgerade, erfasst wird, wobei (i) der Laufindex der Öffnungselemente ist und entgegen der Passagenströmungsrichtung als ansteigend definiert ist, wobei N die Anzahl der vorgesehenen Öffnungselemente ist, wobei der Neigungswinkel $\alpha$ (i) eines Öffnungselements (i) gegeben ist durch:

$$\{\beta2+90° + (i{-}1){*} (\beta1 - \beta2)/(N{-}1)\} -20° < \alpha(i) < \{\beta2 + 90°+ (i{-}1){*}(\beta1 - \beta2)/(N{-}1)\} +20°,$$ wobei $\beta1$ der Neigungswinkel der Skelettlinie an der Vorderkante des Schaufelprofils und $\beta2$ der Neigungswinkel der Skelettlinie an der Hinterkante gegenüber der Meridionalströmungsrichtung ist, und

dass die Mittel zur Fluidzufuhr bei Betrachtung der Ringoberfläche in dem aus Meridianströmungsrichtung m und Umfangsrichtung u gebildeten Koordinatensystem in einer durch einen Kurvenzug F1-F2-F3-F4-F5-F6-F7-F1 umschlossenen Zone ausgebildet sind, wobei

- die Strecken F1-F2 und F6-F7 eine tangentiale Verlängerung der Profilsskelettlinie gegen die Anströmrichtung darstellen,
- die Strecke F1-F7 um 25% der meridionalen Profilsehnenlänge stromauf der Vorderkantenebene liegt,
- die Strecke F2-F3 durch die Saugseitenkontur der Schaufel zwischen der Vorderkante und einer Position bei 20% der meridionalen Profilsehnenlänge stromauf der Hinterkante angeordnet ist,
- die Strecke F3-F4 senkrecht zur tangentialen Verlängerung der Profilskelettlinie an der Hinterkante verläuft und um einen Betrag von 60% der in der Hinterkantenebene bestimmten Schaufelteilung S in Richtung der Druckseite des gegenüber liegenden Schaufelprofils führt,
- die Strecke F4-F5 in einen bei 35% der meridionalen Profilsehnenlänge innerhalb der Schaufelpassage auf der Druckseite des gegenüber liegenden Schaufelprofils vorgesehenen Punkt mündet,
- die Strecke F5-F6 entlang der Druckseite zur Vorderkante führt.

**Claims**

1. Fluid-flow machine with at least one rotor (6), which includes several rotor blades (8) attached to a rotating shaft and with a casing (1) which forms an annulus and is passed by a fluid flowing through the rotor (6) and/or a stator (9), with means for the supply of fluid to at least one blade (8) of a blade row of the rotor (6) and/or the stator (9) being provided on aerodynamically critical points on trailing edge and rim-near surfaces (HRO),
with the means for fluid supply on trailing edge and rim-near surfaces (HRO) - for specifically influencing the three-dimensional flow in the area of the blade ends - being provided on surfaces of the hub or casing contour of the annulus (10) in the region of a fixed connection to the blade between the trailing edge plane (HK) of the blade and a plane located at 25 % of the meridional blade chord length Cm upstream of the leading edge (VK) on the rotor (8) or stator (9),
**characterized in that**
the means for fluid supply are formed by opening elements from a group of opening elements including a slot, a row of hole-type recesses with a maximum width (W) of the hole configuration of 15% of the exit-side blade pitch (W < 0.15 * S) and/or a flat nozzle designed as a slot, with fluid being supplied at a maximum angle of 30° to the annulus surface and the annulus surface being provided with an appropriate step,
that the means for fluid supply are provided by a plurality of opening elements of the group of opening elements, with the arrangement of each opening element being defined by a starting point A and an end point E as well as by the inclination of the auxiliary line passing through the points A and E relative to the meridional flow line direction (m), with each of the starting points A of an opening element being arranged on a base line in the area between the suction-side contour proper and a limit defined by the suction-side contour at a distance of 20 % of the exit-side blade pitch S,
that (i) is the running index of the opening elements and defined as ascending against the passage flow direction, with N being the number of the plurality of opening elements provided, with the meridional trailing-edge distance m (i), i.e. the distance of each starting point A(i) of an opening element (i) from the trailing-edge plane against the meridional flow direction being defined as per the following rule:

$$\{ 0.3 \text{*Cm} + 0.7 \text{*Cm*} (i-1) / (N-1) \} - 0.1 \text{*Cm} < m(i) > \{ 0.3 \text{*Cm} + 0.7 \text{*Cm*} (i-1) / (N-1) \} + 0.1 \text{*Cm},$$

that the means for fluid supply are provided by a plurality of opening elements of the group of opening elements, with the arrangement of each opening element being defined by a starting point A and an end point E as well as by an inclination of the auxiliary line passing through the points A and E relative to the meridional flow line direction (m), with the inclination of an opening element being determined by the angle $\alpha$ measured against the sense of rotation of the flow deflection of the blade row between the meridional flow direction m and the auxiliary line, with (i) being the running index of the opening elements and defined as ascending against the passage flow direction, with N being the number of the opening elements provided, with the inclination angle $\alpha(i)$ of an opening element (i) being determined by
$\{\beta2 + 90° + (i-1)\text{*} (\beta1 - \beta2) / (N - 1) \} - 20° < \alpha(i) < \{\beta2 + 90° + (i - \text{*} )\text{*} (\beta1 - \beta2) / (N-1)\} + 20°$, with $\beta1$ being the inclination angle of the skeleton line at the leading edge of the blade profile and $\beta2$ being the inclination angle of the skeleton line at the trailing edge relative to the meridional flow direction, and
that the means for fluid supply, when viewing the annulus surface in the coordinate system established by the meridional flow direction m and the circumferential direction u, are provided in a zone enclosed by a series of curves F1-F2-F3-F4-F5-F6-F7-F1, with

- the line segments F1-F2 and F6-F7 representing a tangential extension of the profile skeleton line against the inflow direction,
- the line segment F1-F7 being arranged at 25% of the meridional profile chord length upstream of the leading-edge plane,
- the line segment F2-F3 being arranged through the suction-side contour of the blade between the leading edge and a position at 20% of the meridional profile chord length upstream of the trailing edge,
- the line segment F3-F4 extending perpendicular to the tangential extension of the profile skeleton line at the trailing edge and leading by an amount of 60% of the blade pitch S defined in the trailing-edge plane in the direction of the pressure side of the opposite blade profile,
- the line segment F4-F5 issuing into a point provided at 35% of the meridional profile chord length within the blade passage on the pressure side of the opposite blade profile,
- the line segment F5-F6 extending along the pressure side to the leading edge.


**Revendications**

1. Turbomachine avec au moins un rotor (6) comprenant plusieurs aubes de rotor (8) fixées sur un arbre rotatif, ainsi qu'un carter (1) formant un canal annulaire qui est traversé par un fluide lors de l'écoulement dans le rotor (6) et/ou dans un stator (9),

   sachant que des moyens destinés à amener du fluide à au moins une aube (8) d'une rangée d'aubes du rotor (6) et/ou du stator (9) sont prévus à des points aérodynamiquement critiques sur des surfaces du bord de fuite et à proximité des bords (HRO),

   sachant que pour influencer de manière ciblée le flux tridimensionnel dans la zone des extrémités des aubes, les moyens destinés à amener du fluide sur des surfaces du bord de fuite et à proximité des bords (HRO) sont formés sur des surfaces du contour du moyeu ou du carter du canal annulaire (10) sur le rotor (8) ou le stator (9) dans la zone d'une jonction fixe par rapport à l'aube entre le plan du bord de fuite (HK) de l'aube et un plan situé à 25 % de la longueur de corde méridienne Cm de l'aube en amont du bord d'attaque (VK),

   **caractérisée en ce que**

   les moyens destinés à amener du fluide sont formés par des éléments d'ouverture d'un groupe d'éléments d'ouverture comprenant une fente, une série d'évidements en forme d'orifices avec une largeur maxi. (W) de la configuration d'orifices égale à 15 % du pas des aubes côté sortie (W < 0,15 * S), et/ou une buse plate en forme de fente, sachant que le fluide est amené sous un angle maximal de 30° sur la surface du canal annulaire et que la surface du canal annulaire présente un gradin approprié,

   que les moyens destinés à amener du fluide sont constitués par une pluralité d'éléments d'ouverture du groupe d'éléments d'ouverture, sachant que la disposition de chaque élément d'ouverture est définie par un point initial A et un point final E ainsi que par l'inclinaison par rapport à la direction de la ligne d'écoulement méridienne (m) de la droite auxiliaire passant par les points A et E, sachant que chaque point initial A d'un élément d'ouverture est situé sur une ligne de base dans la zone entre le contour côté aspiration lui-même et une limite définie par le contour côté aspiration à une distance égale à 20 % du pas des aubes S du côté sortie,

   que (i) est l'indice courant des éléments d'ouverture et est défini comme ascendant dans le sens contraire au sens d'écoulement de passage, sachant que N est le nombre de la pluralité d'éléments d'ouverture prévus, que la distance méridienne du bord de fuite m(i), c.-à-d. la distance de chaque point initial A(i) d'un élément d'ouverture (i) au plan du bord de fuite dans le sens contraire au sens d'écoulement méridien, est définie conformément à la règle suivante :

$$\{ 0{,}3{*}Cm + 0{,}7{*}Cm{*}\ (i\text{-}1) / (N\text{-}1) \} - 0{,}1{*}Cm < m(i) > \{ 0{,}3{*}Cm + 0{,}7{*}Cm{*}\ (i\text{-}1) / (N\text{-}1) \} + 0{,}1{*}Cm,$$

   sachant que les moyens destinés à amener du fluide sont constitués par une pluralité d'éléments d'ouverture du groupe d'éléments d'ouverture, sachant que la disposition de chaque élément d'ouverture est définie par un point initial A et un point final E ainsi que par une inclinaison par rapport à la direction de la ligne d'écoulement méridienne (m) de la droite auxiliaire passant par les points A et E, sachant que l'inclinaison d'un élément d'ouverture est déterminée par l'angle α, mesuré dans le sens contraire au sens de rotation de la déviation d'écoulement de la rangée d'aubes entre le sens d'écoulement méridien m et la droite auxiliaire, que (i) est l'indice courant des éléments d'ouverture et est défini comme ascendant dans le sens contraire au sens d'écoulement de passage, que N est le nombre des éléments d'ouverture prévus, que l'angle d'inclinaison α (i) d'un élément d'ouverture (i) est déterminé par :

   $\{β2 + 90° + (i\text{-}1){*}\ (β1 - β2)/ (N - 1)\} - 20° < α(i) < \{β2 + 90° + (i - 1){*}\ (β1 - β2) / (N\text{-}1)\} + 20°$, sachant que β1 est l'angle d'inclinaison de la ligne moyenne sur le bord d'attaque du profil d'aube et β2 est l'angle d'inclinaison de la ligne moyenne sur le bord de fuite par rapport au sens d'écoulement méridien, et

   qu'en observant la surface du canal annulaire dans le système de coordonnées formé par le sens d'écoulement méridien m et le sens circonférentiel u, les moyens destinés à amener du fluide sont formés dans une zone entourée par une série de segments de courbes F1-F2-F3-F4-F5-F6-F7-F1, où

- les segments F1-F2 et F6-F7 représentent un prolongement tangentiel de la ligne moyenne de profil dans le sens contraire au sens d'écoulement,
- le segment F1-F7 se situe à 25 % de la longueur de corde méridienne du profil en amont du plan du bord d'attaque,
- le segment F2-F3 est disposé à travers le contour côté aspiration de l'aube entre le bord d'attaque et une position à 20 % de la longueur de corde méridienne du profil en amont du bord de fuite,
- le segment F3-F4 s'étend perpendiculairement au prolongement tangentiel de la ligne moyenne de profil sur le bord de fuite et mène d'un montant de 60 % du pas des aubes S défini dans le plan du bord de fuite en direction du côté refoulement du profil d'aube opposé,
- le segment F4-F5 aboutit à un point prévu à 35 % de la longueur de corde méridienne du profil dans le passage d'aube du côté refoulement du profil d'aube opposé,
- le segment F5-F6 s'étend au bord d'attaque le long du côté refoulement.

**Rotor:**
Einzeldüsen
am Gehäuse
(punktuell)

Saugseite (SS)

**Rotor und Stator**
Schlitz (an Vorderkante oder
auf SS bei bis zu 60% Profiltiefe)

**Rotor:**
Schlitz an Nabe oder Gehäuse,
weit vor der Hinterkante

Fig.1

EP 2 226 509 B1

Fig.2

**Fig.3**

Gehäuse

Ringkanal

10

Rotortrommel
(Nabe)

11    13

Vorleitrad

Rotor
n

Stator
n

Rotor
n+1

Stator
n+1

r

x

Maschinenachse

**Fig.4A**

Gehäuse

Ringkanal

10

Rotor-
Trommel 1
(Nabe)

Rotor
n

Rotor
n+1

Stator
n+1

Rotor-
Trommel 2
(Nabe)

r

x

13

Maschinenachse

**Fig.4B**

Gehäuse

Ringkanal

10

Rotortrommel
(Nabe)

Rotor
(n)

Stator
(n)
aussen

Gehäuse

Stator
(n)
innen

Rotor
(n+1)

Stator
(n+1)

r

x

Maschinenachse

13

**Fig.4C**

Gehäuse

Ringkanal

10

Rotor-
Trommel 1
(Nabe)

Rotor
(n)

Rotor
(n+1)

Stator
(n+1)

Rotor-
Trommel 2
(Nabe)

Gehäuse

S
(n)

R
(n+1)

S
(n+1)

r

x

Maschinenachse

13

**Fig.4D**

Stromlinie bei 75% der Ringkanalweite W

Stromlinie bei 25% der Ringkanalweite W

Hinterkanten- und Randnahe Oberflächen HRO

$C_m$

$0{,}35\ C_m$

HK

VK

m

W

Stator

Linie bei 70% der meridionalen (d. h. auf Meridianstromlinien gemessenen) Schaufelprofiltiefe

7

Rotor

6

Gehäuse

Ring-kanal

10

Mittlere Meridian-Stromlinie

VK

HK

$C_m$

$0{,}25\ C_m$

Nabe

Maschinenachse

13

x

r

**Fig.5**

17

Fig.6

Fig.7

**a.** Rotor mit Außendeckband

HRO, Typ C

HRO, Typ C

**b.** Rotor mit Laufspalt und freien Blattspitzen

HRO, Typ D

HRO, Typ E

HRO, Typ C

**c.** Stator mit Innendeckband

HRO, Typ C

HRO, Typ C

**d.** Stator mit Laufspalt (innen) und freien Schaufelspitzen

HRO, Typ C

HRO, Typ E

HRO, Typ D

**e.** Stator mit Standspalt (innen) und freien Schaufelspitzen

HRO, Typ C

HRO, Typ E

HRO, Typ D

**f.** Stator mit Standspalt (außen) und freien Schaufelspitzen

HRO, Typ D

HRO, Typ E

HRO, Typ C

**g.** Stator mit zweifacher Befestigung

HRO, Typ C

HRO, Typ C

———— Ruhendes Bauteil   ··········· Rotierendes Bauteil

## Fig.8

EP 2 226 509 B1

Fig.9

Fig.10

EP 2 226 509 B1

EP 2 226 509 B1

Individuelle Fluidzufuhr
(Drosselorgan optional)

ZK

ZK

ZK

ZK

Gehäuse

Stator

Ringkanal
(= Hauptströmungspfad)

SK

SK

SK

SK

SK

SK

SK

SK

SK

NK

NK

Nabe

NK

Rotor

r

x

Maschinenachse

⊗ Drosselorgan

Fig.11

Fig.12

Stator

Rotor

Nabe

Gehäuse

Drosselorgan

Ringkanal
(= Hauptströmungspfad)

Individuelle Fluidzufuhr
(Drosselorgan optional)

Maschinenachse

GK, GK, SK, SK, SK, SK, SK, SK, SK, ZK, ZK, ZK, ZK, ZK, ZK

x, r

Fig.13

Fig.14

Fluidzufuhrvorrichtung an HRO Typ C, (Darstellung Teil 1)

Fig.15

## Fluidzufuhrvorrichtung an HRO Typ C, (Darstellung Teil 2)
### beispielhaft für den Fall N = 3 (3 Schlitze oder Ersatzelemente)

Fig.16

EP 2 226 509 B1

# Fluidzufuhrvorrichtung an HRO Typ C, (Darstellung Teil 3)
## beispielhaft für den Fall N = 3 (3 Schlitze oder Ersatzelemente)

EP 2 226 509 B1

## Schnitt A - A

Schaufelende
mit fester
Anbindung an
Ringkanalwandung

u

m

A

A

mindestens eine
ZK bzw. GK bzw. NK

## Fig.17

# Fluidzufuhrvorrichtung an HRO Typ C, (Darstellung Teil 4)
## beispielhaft für den Fall N = 3 (3 Schlitze oder Ersatzelemente)

Lochformation

Schlitzformation

W

W

Flachdüse

Meridianschnitt A-A
durch Flachdüse:

0° – 30°

Fig.18

EP 2 226 509 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5690473 A
- US 6334753 B
- US 2870957 A
- US 2933238 A
- US 5480284 A
- US 4131389 A
- DE 69105418 T2